# FASCICULE DE BREVET EUROPEEN

(11) **EP 4 348 018 B1**
(45) Date de publication et mention de la délivrance du brevet: **19.03.2025**
(21) Numéro de dépôt: 22734659.0
(22) Date de dépôt: 01.06.2022
(51) Int. Cl.: F02C 7/22, F04D 29/048

(54) **TURBOMACHINE ÉQUIPÉE D'UNE POMPE A ENTRAÎNEMENT MAGNÉTIQUE**
TURBOMASCHINE MIT MAGNETANTRIEBSPUMPE
TURBOMACHINE PROVIDED WITH A MAGNETIC DRIVE PUMP

(30) Priorité: 03.06.2021 FR 2105859
(43) Date de publication de la demande: 10.04.2024
(73) Titulaire: Safran Helicopter Engines, 64510 Bordes (FR)
(72) Inventeur: TAIEB, David Simon Serge, 77550 MOISSY-CRAMAYEL (FR); GIGON, Jean-Marie André Robert, 77550 MOISSY-CRAMAYEL (FR); DUPEU, Franck Albert Robert, 77550 MOISSY-CRAMAYEL (FR)
(74) Mandataire: Gevers & Orès
(86) Numéro de dépôt international: PCT/FR2022/051038
(87) Numéro de publication internationale: WO 2022/254148

(56) Documents cités:
- DE-A1- 102017 222 754
- FR-A1- 3 102 510
- US-A- 5 145 329

## Description

### DOMAINE TECHNIQUE

La présente invention concerne le domaine des turbomachines du type comprenant un corps rotatif comprenant un arbre moteur délivrant une puissance mécanique et au moins une pompe à entrainement magnétique.

L'invention s'applique à tout type de turbomachines, en particulier celles utilisées dans les aéronefs comme les turboréacteurs, turbopropulseurs, et turbomachines à soufflantes non carénées, aussi connues sous le vocable anglo-saxon de « Open Rotor ».

### TECHNIQUE ANTÉRIEURE

L'arrière-plan technique comprend notamment le document FR3102510 A1.

Une turbomachine conventionnelle comporte de manière connue un ou plusieurs corps rotatifs. Chaque corps rotatif comprend un compresseur, une turbine et un arbre moteur reliant la turbine au compresseur pour entraîner le compresseur en rotation. Une partie de la puissance générée par la turbomachine est utilisée pour entraîner différents accessoires (ou machines auxiliaires), nécessaires au fonctionnement du turboréacteur ou de l'aéronef, tels que par exemple une pompe de lubrification ou une pompe à carburant.

A cet effet, la turbomachine comprend généralement une boîte d'engrenage d'accessoires (également connue « Accessory Gear Box » en anglais) reliant l'arbre moteur aux pompes. Lorsque l'arbre moteur est entraîné en rotation, la boîte d'engrenage d'accessoires transmet le mouvement de rotation aux différents accessoires. En d'autres termes, l'énergie mécanique produite par l'arbre moteur est transmise aux pompes par la boîte d'engrenage d'accessoires.

Cette solution technique présente toutefois les inconvénients suivants :
- une partie de la puissance mécanique délivrée par le corps rotatif est prélevée pour entraîner la ou les pompes,
- la vitesse de rotation de la ou des pompes est dépendante de la vitesse de rotation de l'arbre moteur, la ou les pompes ne pouvant alors pas être pilotées selon un régime moteur indépendant,
- la liaison mécanique entre l'arbre moteur et la ou les pompes nécessite des étanchéités dynamiques qui sont difficiles à réaliser et s'usent au cours du temps,
- la ou les pompes comportent un arbre de rotation supporté par des paliers mécaniques soumis aux usures mécaniques liées aux frottements qui diminuent fortement le rendement de la ou des pompes.
- la liaison mécanique entre l'arbre moteur et la ou les pompes requiert de placer la ou les pompes au voisinage de la boîte d'engrenage d'accessoires, ce qui limite grandement les possibilités d'implantation de la ou des pompes dans une turbomachine et la soumet à des contraintes thermiques.

### RÉSUMÉ DE L'INVENTION

La présente invention a pour but de remédier à au moins une partie de ces inconvénients et de proposer une turbomachine comportant une pompe découplée mécaniquement de l'arbre moteur et dans laquelle les contacts physiques entre le rotor de la pompe et le reste de la pompe sont éliminés.

À cet effet, l'invention concerne une turbomachine comprenant un corps rotatif comportant un arbre moteur délivrant une puissance mécanique, et au moins une pompe à entrainement magnétique comprenant au moins :
- un stator délimitant un volume interne annulaire et comportant un premier et un second flasques,
- un rotor agencé dans le volume interne entre les premier et second flasques et apte à entraîner un fluide, le rotor étant mobile en rotation autour d'un axe de rotation,
- une paire d'aimants de polarités opposées agencée sur le rotor de manière coaxiale avec l'axe de rotation,
- un aimant agencé sur le premier flasque pour coopérer avec un des aimants de la paire d'aimants du rotor,
- un moyen d'entrainement magnétique du rotor en rotation distant du rotor par le second flasque, le second flasque étant amagnétique.

La turbomachine selon l'invention est ainsi équipée d'une ou plusieurs pompes qui peuvent soit être découplées mécaniquement de l'arbre moteur et alors pilotables indépendamment du régime moteur, soit couplées magnétiquement à l'arbre moteur. Il est ainsi possible d'avoir une plus grande liberté sur le choix de la vitesse de rotation de la pompe et sur les possibilités d'implantation de la ou les pompes dans la turbomachine. En effet, la pompe est entrainée en rotation par un entrainement magnétique au lieu d'un arbre mécanique.

En outre, les paliers mécaniques de l'art antérieur sont remplacés par un palier « magnétique » formé par les aimants agencés sur le rotor et le stator coaxialement avec l'axe de rotation du rotor, éliminant ainsi les contacts physiques entre le rotor et le reste de la pompe.

Ainsi, les aimants de la pompe permettent à la fois de réaliser l'entraînement en rotation du rotor de la pompe et de réaliser un calage du rotor dans la pompe axial magnétiquement et radial par le champ magnétique.

Selon une caractéristique particulière de l'invention, le moyen d'entraînement magnétique comporte un arbre couplé mécaniquement avec l'arbre moteur du corps rotatif de la turbomachine ou avec l'arbre moteur d'une machine électrique et un couple d'aimants de polarités opposées agencée de manière coaxiale avec l'axe de rotation et solidaire de l'arbre, et le second flasque comporte un palier logeant ledit couple d'aimants du moyen d'entraînement magnétique.

Le rotor de la pompe peut ainsi être entrainé par le moyen d'entraînement de la même manière que dans un coupleur magnétique par la rotation de l'arbre externe sans contact entre eux par un accouplement à flux axial entre les aimants du rotor et les aimants du moyen d'entrainement.

Avantageusement, les aimants de la paire d'aimants agencée sur le rotor, l'aimant agencé sur le premier flasque et les aimants du moyen d'entraînement magnétique sont des aimants permanents.

Selon une caractéristique particulière de l'invention, les aimants de la paire d'aimants agencée sur le rotor, l'aimant agencé sur le premier flasque et les aimants du moyen d'entraînement magnétique forment une rangée d'aimants de polarités alternées.

De préférence, la ou les pompes à entrainement magnétique sont du type à anneau liquide, à canal latéral ou gérotor.

Selon une autre caractéristique particulière, au moins une des pompes est agencée et configurée pour alimenter la turbomachine en carburant ou en lubrifiant ou réaliser un transfert de carburant entre des compartiments d'un réservoir d'une turbomachine ou réaliser la mise en pression d'un compresseur air ou pour être utilisée dans un système de dégivrage sans prélèvement.

L'invention a encore pour objet un aéronef comprenant au moins un turbopropulseur ou un turboréacteur comprenant une turbomachine selon l'invention.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- La figure 1 est une vue schématique en perspective éclatée d'une pompe électromagnétique conformément à un mode de réalisation de l'invention,
- La figure 2 est une vue schématique en coupe selon l'axe longitudinal de la pompe électromagnétique de la figure 1,
- La figure 3 est une vue schématique en coupe selon l'axe longitudinal de la pompe électromagnétique de la figure 1 selon une variante, et
- La figure 4 est une représentation schématique d'une turbomachine selon l'invention.

Les éléments ayant les mêmes fonctions dans les différentes mises en œuvre ont les mêmes références dans les figures.

### DESCRIPTION DES MODES DE RÉALISATION

L'invention s'applique d'une manière générale à toute turbomachine équipée d'au moins une pompe pilotée indépendamment du régime moteur de la turbomachine. Elle s'applique notamment, mais pas exclusivement, aux pompes du type à anneau liquide, à canal latéral ou régénérative et gérotor. De même, l'invention peut s'appliquer aux pompes centrifuges ou volumétriques à engrenages.

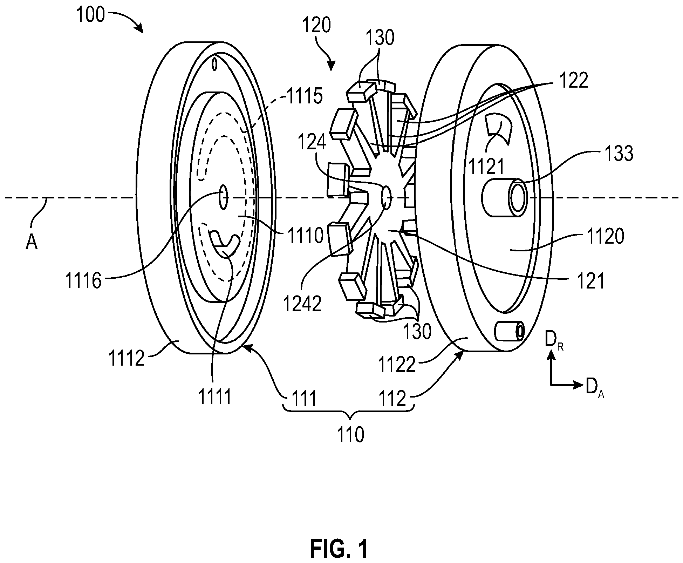

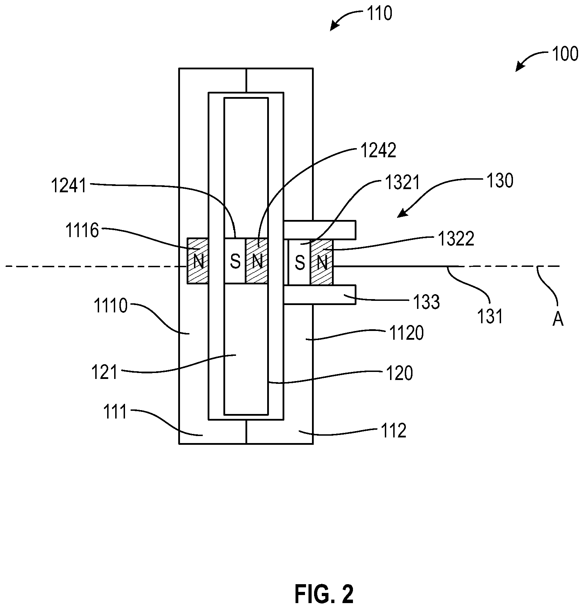

Les figures 1 et 2 illustrent une pompe électromagnétique 100 conformément à un mode de réalisation de l'invention. Dans l'exemple décrit ici, la pompe électromagnétique 100 est une pompe du type à anneau liquide comprenant un corps de pompe fixe ou stator 110 délimitant un volume interne annulaire et comprenant un premier demi-carter 111 et un deuxième demi-carter 112. Le premier demi-carter 111 comporte une partie centrale cylindrique pleine 1110, formant un premier flasque, et une paroi externe circulaire 1112 s'étendant concentriquement autour de la partie centrale 1110. Le premier flasque 1110 est muni d'un port d'aspiration ou de refoulement 1111.

De même, le deuxième demi-carter 112 comporte une partie centrale cylindrique pleine 1120, formant un deuxième flasque, et une paroi externe circulaire 1122 s'étendant concentriquement autour de la partie centrale 1120. Le deuxième flasque 1120 comporte un port de refoulement ou d'aspiration 1121. Le deuxième flasque 1120 est amagnétique.

En outre, la pompe électromagnétique 100 comprend une roue à aubes 120, également appelée rotor ou rouet, agencée dans le volume interne entre les deux flasques du stator et apte à entraîner un fluide. Le rotor 120 est mobile en rotation autour d'un axe de rotation A suivant une direction axiale D_{A} et comprend une roue 121 muni d'une pluralité d'aubes 122 s'étendant depuis la roue suivant une direction radiale D_{R}.

La roue à aubes 120 comporte un arbre magnétique de rotation 124 s'étendant suivant la direction axiale D_{A}, formé d'une paire d'aimants, de préférence permanents, de polarités opposées agencée sur la roue à aubes 120 du rotor de manière coaxiale avec l'axe de rotation A. Dans l'exemple décrit ici, la paire d'aimants comporte deux pastilles aimantées s'étendant le long de l'axe de rotation suivant la direction axiale D_{A}, l'une 1241 de pôle sud et l'autre 1242 de pôle nord. Par pastille aimantée, on entend un aimant de forme cylindrique dont l'axe est suivant la direction axiale D_{A}. A cet effet, la roue à aubes 120 comporte un orifice traversant s'étendant le long de l'axe de rotation A dans lequel est logée la paire d'aimants 1241, 1242.

De plus, le premier flasque 1110 comporte une cavité cylindrique s'étendant le long de l'axe de rotation A logeant un aimant 1116, de préférence permanent et en forme de pastille aimantée. L'aimant 1116 du premier flasque 1110 est agencé coaxialement avec l'axe de rotation A et donc avec la paire d'aimants 1241, 1242 du rotor. Il est adapté pour coopérer avec un des aimants du rotor arrangé en face de lui. En d'autres termes, l'aimant 1116 du premier flasque 1110 est agencé en vis-à-vis de l'aimant 1241 et a une polarité opposée à celle de celui-ci. Ainsi, dans l'exemple décrit ici, l'aimant 1116 a un pôle nord puisque l'aimant 1241 du rotor agencé en regard a un pôle sud.

En outre, la pompe à entrainement magnétique 100 comporte un moyen d'entrainement magnétique 130 du rotor en rotation sans contact. Le moyen d'entrainement magnétique 130 est agencé sur le second flasque 112. Le moyen d'entrainement magnétique 130 est distant du rotor 120 notamment par le second flasque amagnétique 112. Il comporte un arbre 131 couplé mécaniquement avec l'arbre moteur du corps rotatif de la turbomachine ou d'une machine électrique et un couple d'aimants, de préférence permanents, de polarités opposées agencé de manière coaxiale avec l'axe de rotation A et solidaire de l'arbre 131, par exemple par collage. Dans l'exemple décrit ici, le couple d'aimants comporte deux pastilles aimantées s'étendant le long de l'axe de rotation suivant la direction axiale D_{A}, l'une 1321 de pôle sud et l'autre 1322 de pôle nord. A cet effet, le second flasque 1120 comporte un palier 133 logeant ledit couple d'aimants du moyen d'entraînement magnétique. Le palier s'étend depuis une face externe du second flasque, c'est-à-dire opposée à une face interne du second flasque agencée en regard du rotor.

Ainsi, les aimants 1241, 1242 de la paire d'aimants agencée sur le rotor, l'aimant 1116 agencé sur le premier flasque et les aimants 1321, 1322 du moyen d'entraînement magnétique 130 sont coaxiaux et forment une rangée d'aimants de polarités alternées. L'aimant 1116 du premier flasque et les aimants 1321, 1322 du moyen d'entraînement magnétique 130 jouent le rôle de palier magnétique pour l'arbre magnétique de rotation 124 du rotor et remplacent ainsi avantageusement les paliers mécaniques de l'art antérieur. En effet, ils permettent de caler axialement le rotor, de façon magnétique et de manière passive, c'est-à-dire sans contact physique entre le rotor et le reste de la pompe. Ils permettent également de caler radialement le rotor par les champs magnétiques induits.

Le rotor de la pompe peut ainsi être entrainé par le moyen d'entraînement 130 de la même manière que dans un coupleur magnétique par la rotation de l'arbre externe 131 sans contact entre eux par un accouplement à flux axial entre les aimants 1241, 1242 du rotor et les aimants 1321, 1322 du moyen d'entrainement 130.

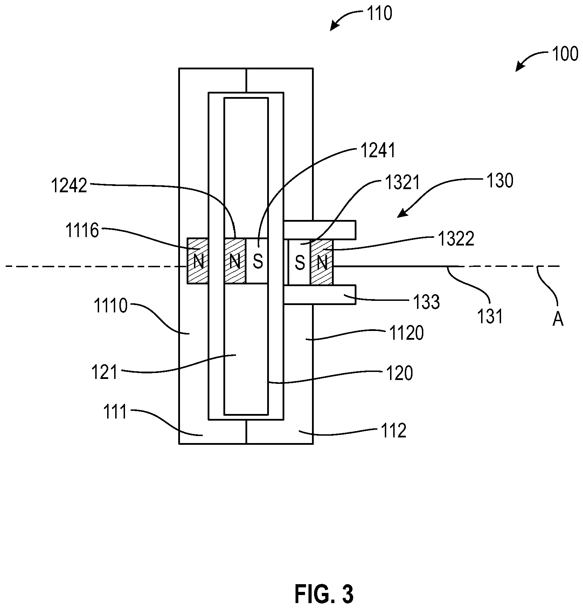

Selon une alternative illustrée sur la figure 3, l'aimant 1116 du premier flasque 1110 est agencé en vis-à-vis de l'aimant 1242 du rotor et sont de même polarité, ici un pôle nord. L'autre aimant 1241 de la paire d'aimants du rotor est agencé en vis-à-vis de l'aimant 1321 du moyen d'entraînement magnétique 130 et sont de même polarité, ici un pôle sud.

Selon un autre mode de réalisation non illustré, les aimants du rotor sont formés d'un arrangement de pastilles aimantées de même polarité formant des disques aimantés et les aimants du moyen d'entraînement magnétique sont formés d'un arrangement de pastilles aimantées de polarité opposée à celle du disque aimanté du rotor agencé en regard et formant également un disque aimanté. Le disque aimanté du rotor et le disque aimanté de l'entrainement magnétique sont disposés l'un en face de l'autre afin de permettre un couplage magnétique entre eux. Le nombre de pastilles aimantées et les dimensions correspondantes des disque aimantés du rotor et de l'entrainement magnétique sont choisis en fonction des besoins de puissance de calage axial et radial et de la puissance d'entrainement nécessaire.

Une fois tous les éléments constitutifs de la pompe 100 assemblés, les aimants permanents 1241, 1242 se trouvent en vis-à-vis des aimants 1321, 1322 du moyen d'entrainement 130 suivant une direction radiale D_{R} comme illustré sur les figures 2 et 3. Le pilotage de la pompe électromagnétique 100 (couple et vitesse de rotation) est réalisé par contrôle du couple et de la vitesse de rotation de l'arbre du moyen d'entrainement 130.

De manière connue dans les pompes de type à anneau liquide, l'arbre est placé de façon excentrique sur la roue à aube 120 par exemple au moyen d'une entretoise (non représentée sur les figures 1 et 2) de manière à créer des variations de volume inter-aubes (ou inter-pales) qui permettent d'aspirer le fluide pompé, par exemple par le port 1111 puis de l'évacuer sous pression, par exemple par le port 1121.

La pompe 100 peut également être une pompe à canal latéral, encore appelée pompe régénérative. Dans ce cas et de façon connue, un canal latéral présent ici sur les demicarters 111 et 112 s'étend entre les ports 1111 et 1121. Seul le canal latéral 1115 sur le demi-carter 111 est illustré en pointillés sur la figure 1. L'évolution des variations de volume inter-aubes (ou inter-pales), associée au champ de vitesse (vortex) présent dans le canal latéral 1115, permet d'aspirer le fluide, par exemple par le port 1111, puis de l'évacuer sous pression, par exemple par le port 1121.

Bien que l'invention a été décrite pour des pompes du type à anneau liquide ou à canal latéral, celle-ci peut également s'appliquer par exemple à des pompes de type gérotor, centrifuges ou volumétriques à engrenages.

Une pompe électromagnétique selon l'invention peut notamment être utilisée pour alimenter en carburant ou en lubrifiant la turbomachine ou réaliser un transfert de carburant entre des compartiments d'un réservoir d'une turbomachine.

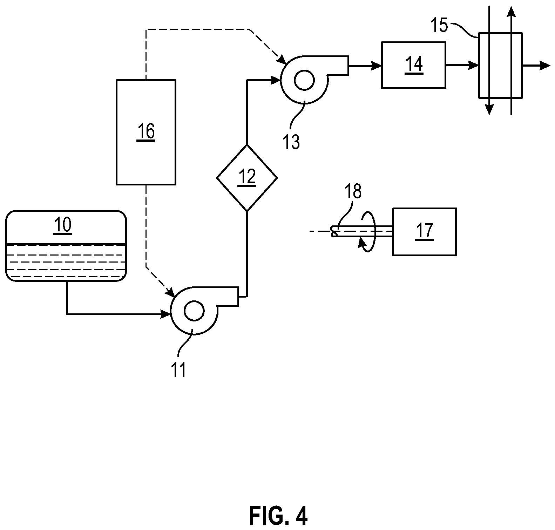

La figure 4 illustre un exemple de turbomachine qui comporte une ligne d'alimentation en carburant composée ici d'un réservoir de carburant 10, d'une pompe basse pression 11, d'un filtre 12, d'une pompe haute pression 13, d'un dispositif de dosage 14 et d'un échangeur de chaleur huile/carburant 15. La turbomachine comprend également une boîte d'accessoires 17 (« gear box ») à laquelle est relié un arbre moteur 18 destiné à délivrer une puissance mécanique dans la turbomachine. Conformément à l'invention, la pompe basse pression 11 est constituée d'une pompe électromagnétique, par exemple du type à anneau liquide ou du type à canal latéral ou régénérative ou du type volumique à engrenages telles que décrites précédemment dans le cas d'un entrainement par une machine électrique. La pompe basse pression 11 est découplée mécaniquement de l'arbre moteur 18 et est pilotée de manière indépendante, par exemple par le calculateur numérique 16 intégré au dispositif de pilotage de la turbomachine.

Concernant le circuit d'alimentation en huile d'une turbomachine, les pompes d'alimentation basse et/ou haute pression peuvent être également remplacées en partie ou en totalité par des pompes électromagnétiques pilotées indépendamment du régime moteur. Dans ce cas, on utilise de préférence mais non exclusivement des pompes de type gérotor.

## Revendications

1. Turbomachine comprenant un corps rotatif comportant un arbre moteur délivrant une puissance mécanique, et au moins une pompe à entrainement magnétique comprenant au moins :
- un stator (110) délimitant un volume interne annulaire et comportant un premier et un second flasques (1110, 1120),
- un rotor (120) agencé dans le volume interne entre les premier et second flasques et apte à entraîner un fluide, le rotor étant mobile en rotation autour d'un axe de rotation (A),
- une paire d'aimants (1241, 1242) de polarités opposées agencée sur le rotor de manière coaxiale avec l'axe de rotation,
- un aimant (1116) agencé sur le premier flasque (1110) pour coopérer avec un des aimants de la paire d'aimants du rotor,
- un moyen d'entrainement magnétique (130) du rotor en rotation agencé sur le second flasque (1120), le second flasque étant amagnétique.

2. Turbomachine selon la revendication 1, dans laquelle le moyen d'entraînement magnétique (130) comporte un arbre (131) couplé mécaniquement avec l'arbre moteur du corps rotatif de la turbomachine et un couple d'aimants (1321, 1322) de polarités opposées agencée de manière coaxiale avec l'axe de rotation (A) et solidaire de l'arbre (131), et le second flasque comporte un palier (133) logeant ledit couple d'aimants du moyen d'entraînement magnétique.

3. Turbomachine selon la revendication 2, dans laquelle les aimants (1241, 1242) de la paire d'aimants agencée sur le rotor, l'aimant (1116) agencé sur le premier flasque et les aimants (1321, 1322) du moyen d'entraînement magnétique sont des aimants permanents.

4. Turbomachine selon l'une des revendications 2 à 3, dans laquelle les aimants (1241, 1242) de la paire d'aimants agencée sur le rotor, l'aimant (1116) agencé sur le premier flasque et les aimants (1321, 1322) du moyen d'entraînement magnétique forment une rangée d'aimants de polarités alternées.

5. Turbomachine selon l'une quelconque des revendications précédentes, dans laquelle la pompe à entrainement magnétique est du type à anneau liquide, à canal latéral, gérotor, centrifuge ou volumétrique à engrenages.

6. Turbomachine selon l'une quelconque des revendications précédentes, dans laquelle au moins une des pompes est agencée pour alimenter la turbomachine en carburant ou en lubrifiant.

7. Aéronef comportant au moins une turbomachine selon l'une quelconque des revendications précédentes.

## Patentansprüche

1. Turbotriebwerk, umfassend einen Drehkörper, der eine Motorwelle umfasst, die eine mechanische Leistung abgibt, und mindestens eine Pumpe mit magnetischem Antrieb, die mindestens umfasst:
- einen Stator (110), der ein ringförmiges internes Volumen abgrenzt und einen ersten und einen zweiten Flansch (1110, 1120) umfasst,
- einen Rotor (120), der zwischen dem ersten und zweiten Flansch in dem internen Volumen angeordnet und fähig ist, ein Fluid anzutreiben, wobei der Rotor um eine Drehachse (A) herum drehbeweglich ist,
- ein Paar von Magneten (1241, 1242) mit entgegengesetzten Polaritäten, das mit der Drehachse auf koaxiale Weise an dem Rotor angeordnet ist,
- einen Magneten (1116), der an dem ersten Flansch (1110) zum Zusammenwirken mit einem der Magneten des Paars von Magneten des Rotors angeordnet ist,
- ein Mittel zum magnetischen Drehantrieb (130) des Rotors, das an dem zweiten Flansch (1120) angeordnet ist, wobei der zweite Flansch nicht magnetisch ist.

2. Turbotriebwerk nach Anspruch 1, wobei das Mittel zum magnetischen Antrieb (130) eine Welle (131), die magnetisch mit der Motorwelle des Drehkörpers des Turbotriebwerks gekoppelt ist, und ein Paar von Magneten (1321, 1322) mit entgegengesetzten Polaritäten umfasst, das auf mit der Drehachse (A) koaxiale Weise angeordnet und mit der Welle (131) einstückig ist, und der zweite Flansch ein Lager (133) umfasst, das das Paar von Magneten des Mittels zum magnetischen Antrieb aufnimmt.

3. Turbotriebwerk nach Anspruch 2, wobei die Magnete (1241, 1242) des Paars von Magneten, das an dem Rotor angeordnet ist, der Magnet (1116), der an dem ersten Flansch angeordnet ist, und die Magnete (1321, 1322) des Mittels zum magnetischen Antrieb Permanentmagnete sind.

4. Turbotriebwerk nach einem der Ansprüche 2 bis 3, wobei die Magnete (1241, 1242) des Paars von Magneten, das an dem Rotor angeordnet ist, der Magnet (1116), der an dem ersten Flansch angeordnet ist, und die Magnete (1321, 1322) des Mittels zum magnetischen Antrieb eine Reihe von Magneten mit wechselnden Polaritäten bilden.

5. Turbotriebwerk nach einem der vorstehenden Ansprüche, wobei die Pumpe mit magnetischem Antrieb vom Flüssigkeitsring-, Seitenkanal-, Gerotor-, Zentrifugen- oder Verdränger-Getriebetyp ist.

6. Turbotriebwerk nach einem der vorstehenden Ansprüche, wobei mindestens eine der Pumpen zum Versorgen des Turbotriebwerks mit Kraftstoff oder mit Schmiermittel angeordnet ist.

7. Luftfahrzeug, umfassend mindestens ein Turbotriebwerk nach einem der vorstehenden Ansprüche.

## Claims

1. A turbomachine comprising a rotary body comprising a motor shaft supplying mechanical power, and at least one magnetic drive pump comprising at least:
- a stator (110) delimiting an annular internal volume and comprising a first and second flanges (1110, 1120),
- a rotor (120) arranged in the internal volume between the first and second flanges and capable of driving a fluid, the rotor being able to rotate about an axis of rotation (A),
- a pair of magnets (1241, 1242) having opposite polarities coaxially arranged on the rotor with the axis of rotation,
- a magnet (1116) arranged on the first flange (1110) to cooperate with one of the magnets of the pair of magnets of the rotor,
- means (130) for magnetically driving the rotor in rotation arranged on the second flange (1120), the second flange being non-magnetic.

2. The turbomachine according to claim 1, wherein the magnetic drive means (130) comprises a shaft (131) mechanically coupled to the motor shaft of the rotary body of the turbomachine and a pair of magnets (1321, 1322) having opposite polarities arranged coaxially with the axis of rotation (A) and secured to the shaft (131), and the second flange comprises a bearing (133) housing said pair of magnets of the magnetic drive means.

3. The turbomachine according to claim 2, wherein the magnets (1241, 1242) of the pair of magnets arranged on the rotor, the magnet (1116) arranged on the first flange and the magnets (1321, 1322) of the magnetic drive means are permanent magnets.

4. The turbomachine according to one of claims 2 to 3, wherein the magnets (1241, 1242) of the pair of magnets arranged on the rotor, the magnet (1116) arranged on the first flange and the magnets (1321, 1322) of the magnetic drive means form a row of magnets of alternating polarities.

5. The turbomachine according to any one of the preceding claims, wherein the magnetic drive pump is of the liquid ring, lateral channel, gerotor, centrifugal or positive displacement gear type.

6. The turbomachine according to any one of the preceding claims, wherein at least one of the pumps is arranged to supply the turbomachine with fuel or lubricant.

7. An aircraft comprising at least one turbomachine according to any one of the preceding claims.
